# EUROPÄISCHE PATENTSCHRIFT

(11) **EP 2 545 975 B1**
(45) Veröffentlichungstag und Bekanntmachung des Hinweises auf die Patenterteilung: **29.10.2014**
(21) Anmeldenummer: 12004562.0
(22) Anmeldetag: 18.06.2012
(51) Int. Cl.: B01D 29/11, B01D 29/21

(54) **Stützvorrichtung mit Fügevorrichtung und Filteranordnung mit der Stützvorrichtung**
Support device with a joining device and filter assembly with the support device
Dispositif d'appui avec un mécanisme d'assemblage et agencement de filtre avec le dispositif d'appui

(30) Priorität: 14.07.2011 DE 102011107368
(43) Veröffentlichungstag der Anmeldung: 16.01.2013
(73) Patentinhaber: Robert Bosch GmbH, 70442 Stuttgart (DE)
(72) Erfinder: Veit, Jochen, 68775 Winsen (DE); Brenneis, Daniel, 68723 Plankstadt (DE); ILINZEER, Sergej, 68804 Altlussheim (DE)
(74) Vertreter: Thürer, Andreas

(56) Entgegenhaltungen:
- WO-A1-2011/048197
- DE-A1- 2 209 718
- DE-A1- 2 624 278
- DE-A1- 19 746 751
- DE-A1-102005 036 580
- FR-A1- 2 265 320
- US-A- 4 905 442

## Beschreibung

Die Erfindung betrifft eine Stützvorrichtung für ein Filterelement mit einer Fügevorrichtung für Endabschnitte des Filterelements und eine Filteranordnung mit einer derartigen Stütz- und Fügevorrichtung.

Es sind Filterelemente für Filter bekannt, über die Verunreinigungen eines Fluids, beispielsweise einer Hydraulikflüssigkeit oder eines Belüftungsvolumenstromes, abgeschieden werden können. Ein solches Filterelement ist an einem für das Fluid durchlässigen Stützelement abgestützt. Häufig ist die Stützvorrichtung hohlkreiszylindrisch, beispielsweise über ein mit Ausnehmungen versehenes einteiliges oder mehrteiliges Rohr ausgebildet. Die Stützvorrichtung ist dabei auf ihrer Außenseite vom Filterelement ummantelt bzw. umgriffen. Im bestimmungsgemäßen Betrieb ist eine Schmutzseite des Filterelements über einen Zulauf mit dem Fluid beaufschlagt, so dass das Fluid durch das Filterelement und die Ausnehmungen der Stützvorrichtung einem Ablauf des Filters bzw. einer Reinseite zuströmt.

Das ringförmig um die Stützvorrichtung angeordnete Filterelement weist zwei benachbart angeordnete Endabschnitte auf, die für eine bestimmungsgemäße Funktion des Filterelements flüssigkeitsdicht miteinander verbunden sein müssen. Sind sie dies nicht, könnte sich an dieser Stelle eine Bypassströmung einstellen, sodass ein Teil des Fluids ungefiltert am Filterelement vorbeiströmen würde. Dies kann zum Ausfall von gegenüber Verunreinigungen empfindlichen Komponenten des vom Fluid durchströmten Systems führen.

Um die Endabschnitte verlässlich zu verbinden, sind herkömmliche Klebeverfahren bekannt. Nachteilig an diesen Klebeverfahren ist jedoch, dass zur Herstellung einer sicheren Klebeverbindung eine erhöhte Anzahl von Prozessparametern in engen Grenzen gehalten werden muss, was einen hohen verfahrenstechnischen und vorrichtungstechnischen Aufwand darstellt. So muss beispielsweise die Kleberqualität von der Anlieferung über die Lagerung bis zum eigentlichen Klebeprozess überwacht und durch entsprechendes Handling im verarbeitenden Betrieb gewährleistet werden. Während des Klebens und in dessen Nachgang muss die Klebertemperatur, der Anpressdruck der zu verbindenden Endabschnitte, deren korrekte Positionierung zueinander, die Aushärtezeit und -temperatur kontrolliert und beherrscht werden. Klebeverfahren erweisen sich daher als aufwendig und sind nur mit hohem Aufwand prozesssicher zu gestalten.

Zur Vermeidung eines Klebeverfahrens und zur verlässlicheren Positionierung der Endabschnitte beim Fügen schlägt die Patentschrift EP 1 409 106 B1 vor, die beiden Endabschnitte des um ein hohlkreiszylindrisches, metallisches Stützelement angeordneten Filterelements mit einem Halteclip aus Kunststoff zunächst mechanisch zu verbinden, auf diese Weise zu halten, und anschließend über ein Ultraschallverfahren stoffschlüssig zu fügen.

Nachteilig an dieser Lösung ist, dass der vorgeschlagene Halteclip beim Fügeprozess relativ zu den Endabschnitten verrutschen kann, was zu einer unzureichenden Verbindung der Endabschnitte führen kann. In Folge kann es zu einer verringerten Dichtheit des Filterelements und damit verbundenen zu einer verringerten Filterleistung oder gar zu einer Fehlfunktion oder einer Beschädigung von Komponenten des vom Fluid durchströmten Systems kommen.

Die Druckschrift DE 10 2005 036 580 A1 zeigt im Wesentlichen einen Filter für Abgase mit einer Filtermatte die um einen Stützkörper gelegt ist. Der Stützkörper hat eine schlitzartige Ausnehmung, in die die Enden der Filtermatte eingelegt sind. In die Ausnehmung ist eine keilartige Leiste eingesetzt, um die Filtermattenenden einzuklemmen.

Einen Filter für Flüssigkeiten zeigt die WO2011/048197A1. Ein gefaltetes Filterelement ist um einen Stützkorb herum angeordnet. Am Stützkorb ist eine Nut gebildet. Die Enden des

Filterelements sind in eine V-förmige Klemmleiste eingelegt. Die Klemmleiste wird zusammen mit den darin eingelegten Filterelementenden in die Nut eingesetzt.

Die DE 197 46 751 A1 zeigt einen Ölfilter mit einem Stützkorb und einer daran befestigten Leiste. Die Leiste hat klammerartige Fortsätze. Die Enden des Filterelements sind zwischen den klammerartigen Fortsätzen eingeklemmt.

Die DE OS 2 209 817 zeigt einen Luftfilter mit einem gefalteten Filterelement. An einem gabelartigen Halteelement sind zwei Greiffortsätze gebildet. Faltenabschnitte des Filterelements sind in die Greiffortsätze eingelegt und mit einer länglichen Klemmleiste zusätzlich in den Greiffortsätzen gesichert.

Die FR 2 265320 A1 beschreibt eine Befestigungsmethode für Textilien an Autositzen. In einen Schlitz werden Enden von Textilbahnen eingelegt und mit einer Steckleiste im Schlitz festgeklemmt.

Dem gegenüber liegt der Erfindung die Aufgabe zu Grunde, eine zuverlässigere Verbindung von Endabschnitten von Filterelementen zu schaffen.

Diese Aufgabe wird gelöst durch eine eine Stützvorrichtung mit den Merkmalen des Patentanspruchs 1, sowie eine Filteranordnung mit den Merkmalen des Patentanspruchs 7.

Vorteilhafte Weiterbildungen der Erfindung sind in den Unteransprüchen beschrieben.

Eine Fügevorrichtung bei der erfindungsgemäßen Stützvorrichtung zur Verbindung von, insbesondere zwei, Endabschnitten eines Filterelementes der Fluidtechnik, insbesondere eines Filtervlieses oder einer Filtermatte, oder mehrerer Filterelemente der Fluidtechnik hat eine Ausnehmung zur Aufnahme der Endabschnitte. Erfindungsgemäß hat die Fügevorrichtung zudem ein Befestigungselement, das zur Festlegung der Endabschnitte, insbesondere zu deren Klemmung, zumindest abschnittsweise in die Ausnehmung einsetzbar ist. Auf diese Weise sind die Endabschnitte mit einfachen vorrichtungstechnischen Mitteln zuverlässig in der Ausnehmung festlegbar, sodass eine zuverlässigere Verbindung der Endabschnitte ermöglicht ist.

Unter Fluidtechnik ist im folgenden insbesondere die Hydraulik, die Pneumatik oder die Belüftungstechnik zu verstehen. Dabei kann das zu filternde Fluid eine Flüssigkeit, beispielsweise eine Hydraulik- oder eine Versorgungsflüssigkeit sein. Ebenso kann das zu filternde Fluid ein Dampf, ein Gas oder ein Belüftungsvolumenstrom sein.

Das Befestigungselement ist zwischen die beiden Endabschnitte einsetzbar. Ganz besonders vorteilhaft ist dabei, wenn eine Einsetzrichtung der Endabschnitte gleich einer Einsetzrichtung des Befestigungselementes ist, sodass über ein Einsetzen des Befestigungselementes die Endabschnitte tiefer in der Ausnehmung drückbar sind.

Ganz besonders vorteilhaft ist es, wenn die Endabschnitte über das Befestigungselement kraftschlüssig und/oder formschlüssig festlegbar sind. So sind die Abschnitte auf einfache vorrichtungstechnische Weise in der Ausnehmung klemmbar oder einspannbar.

Um eine Klemmung der Endabschnitte zwischen dem Befestigungselement und der Ausnehmung zu unterstützen oder zu verstärken, ist die Ausnehmung in einer Einsetzrichtung zumindest abschnittsweise verjüngend ausgebildet.

Vorrichtungstechnisch besonders einfach ist die Ausnehmung als Nut ausgebildet.

Ist diese Nut bzw. die Ausnehmung an einer Leiste oder an einem anders gearteten Ausnehmungsträger angeordnet, so ist es möglich, die Endabschnitte über eine Berandung der Nut bzw. der Ausnehmung zu falten und so die Endabschnitte zusätzlich festzulegen bzw. zu positionieren.

Das Befestigungselement hat eine Rippe, die in die Ausnehmung oder die Nut einsetzbar ist. Alternativ dazu ist das Befestigungselement als solches als eine Rippe ausgebildet.

Um das Befestigungselement gegen eine Verschiebung relativ zur Ausnehmung zu sichern, weisen die Ausnehmung bzw. die Nut und die Rippe jeweils zumindest eine laterale Erweiterung auf, wobei die lateralen Erweiterungen der Nut bzw. Ausnehmung mit der Rippe miteinander verrastbar sind.

Die Nut kann zu diesem Zweck beispielsweise eine seitliche Ausnehmung aufweisen, in die eine seitlich vorspringende Schulter der Rippe einrasten kann. Besonders bevorzugt haben die Rippe und die Nut jeweils zwei gegenüberliegend angeordnete laterale Erweiterungen.

Bevorzugt besteht die Fügevorrichtung zumindest abschnittsweise aus Kunststoff, ganz besonders bevorzugt vollständig aus Kunststoff. Der Kunststoff ist dabei bevorzugt elektrisch leitfähig, sodass die Fügevorrichtung als Antistatikelement ausgebildet ist. Alternativ dazu kann die Fügevorrichtung auch aus Metall bestehen.

Die erfindungsgemäße Stützvorrichtung für ein Filterelement, insbesondere ein Filtervlies oder eine Filtermatte, oder mehrere Filterelemente der Fluidtechnik hat eine hohlzylindrische fluiddurchlässige Wandung, an der das Filterelement oder die Filterelemente abstützbar ist bzw. sind. Zudem weist es die bereits besprochene erfindungsgemäße Fügevorrichtung zur Verbindung von, insbesondere zwei, Endabschnitten des Filterelementes bzw. der Filterelemente auf. Eine derartige Stützvorrichtung, die eine Einheit aus fluiddurchlässiger hohlzylindrischer Wandung und der erfindungsgemäßen Fügevorrichtung darstellt, eignet sich besonders gut für eine einfache Montage und Verbindung des Filterelementes oder der Filterelemente, da das Filterelement oder die Filterelemente zur Verbindung in der Fügevorrichtung auf einfache Weise an der Wandung der Stützvorrichtung abstützbar und somit positionierbar ist bzw. sind. Ein Einlegen der Endabschnitte des Filterelementes oder der Filterelemente ist damit vereinfacht und eine zuverlässigere Verbindung der Endabschnitte ermöglicht. Bevorzugt ist die Wandung dabei kreiszylindrisch ausgebildet.

In einer besonders bevorzugten und vorteilhaften Weiterbildung der Stützvorrichtung ist in einer ersten Variante an dieser die Ausnehmung der Fügevorrichtung oder die Leiste der Fügevorrichtung, an der die Ausnehmung angeordnet ist, angeordnet. Die Ausnehmung ist somit einstückig in die Stützvorrichtung integriert.

Die Wandung der Stützvorrichtung ist bevorzugt perforiert, um Druckmittel bzw. Fluid von einer Zulaufseite, an der das Filterelement abstützbar ist, zu einer Ablaufseite der

Stützvorrichtung fördern zu können. Alternativ dazu kann die Wandung gitter-, sieb- oder korbartig ausgestaltet sein.

Ganz besonders bevorzugt ist die Stützvorrichtung überwiegend aus Kunststoff gefertigt. Der verwendete Kunststoff hat weitgehende fertigungstechnische Vorteile, da er in wenig aufwendigen Kunststoffspritzverfahren verarbeitbar ist. Besonders bevorzugt kommt dabei ein elektrisch leitfähiger Kunststoff zum Einsatz, sodass die Stützvorrichtung als Antistatikelement ausgebildet ist. Zudem entfällt bei der Verwendung von Kunststoff eine Notwendigkeit des Korrosionsschutzes, beispielsweise gegen korrosive Hydraulikflüssigkeiten, wie es beispielsweise bei der Verwendung von Metall notwendig ist. Dennoch kann die Stützvorrichtung alternativ dazu auch zumindest abschnittsweise oder überwiegend aus Metall gefertigt sein.

Eine erfindungsgemäße Filteranordnung hat zumindest ein Filterelement der Fluidtechnik, insbesondere ein Filtervlies oder eine Filtermatte. Zudem hat es eine Stützvorrichtung, wie sie oben besprochen wurde. An der Stützvorrichtung ist dabei das Filterelement abgestützt, wobei insbesondere zwei Endabschnitte des Filterelements in die Ausnehmung der vorbesprochenen erfindungsgemäßen Fügevorrichtung der Stützvorrichtung eingesetzt sind. Zudem ist das Befestigungselement der Fügevorrichtung zumindest abschnittsweise in die Ausnehmung eingesetzt, sodass die Endabschnitte über das Befestigungselement insbesondere kraft- bzw. auch formschlüssig in der Ausnehmung festgelegt sind.

Über die derart gestaltete Filteranordnung sind die Endabschnitt zuverlässig festgelegt. Ein Verrutschen ist nicht mehr möglich, da das Befestigungselement und die Ausnehmung die Endabschnitte klemmen.

Um die Festlegung der Endabschnitte noch zuverlässiger zu gestalten, ist in einer besonders bevorzugten Weiterbildung der Filteranordnung eine Berandung der Ausnehmung, insbesondere ein Rand der Leiste, an der die Ausnehmung angeordnet ist, zumindest abschnittsweise stoffschlüssig mit den Endabschnitten des oder der Filterelemente/s und mit dem Befestigungselement verbunden. Die stoffschlüssige Verbindung ist dabei bevorzugt eine Ultraschallschweißverbindung, sodass auf eine Klebeverbindung verzichtet werden kann. Durch die Ultraschallschweißverbindung ist das Befestigungselement unlösbar bzw. nur durch Zerstörung lösbar mit der Fügevorrichtung bzw. der Stützvorrichtung fest verbunden.

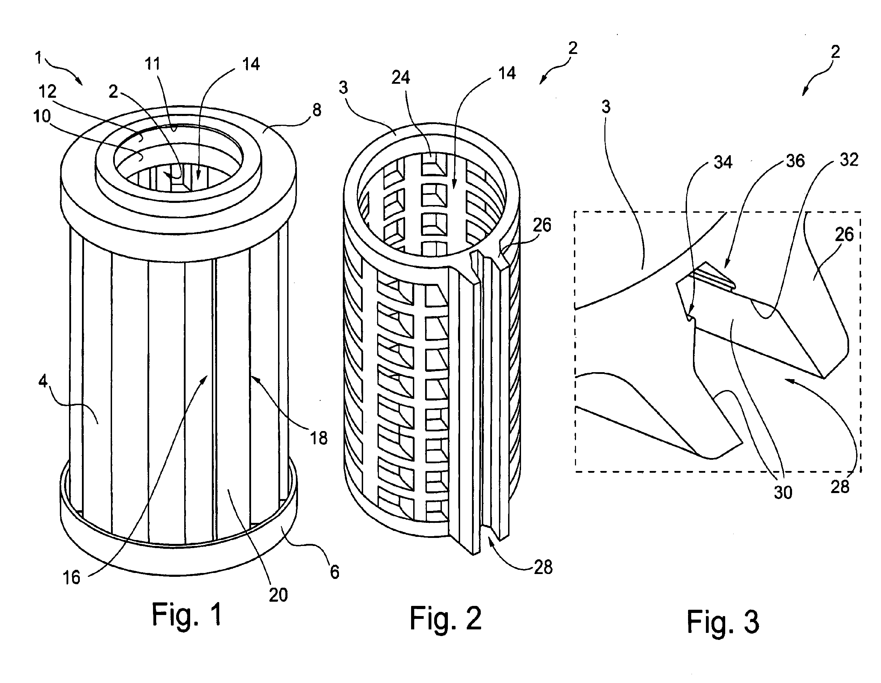

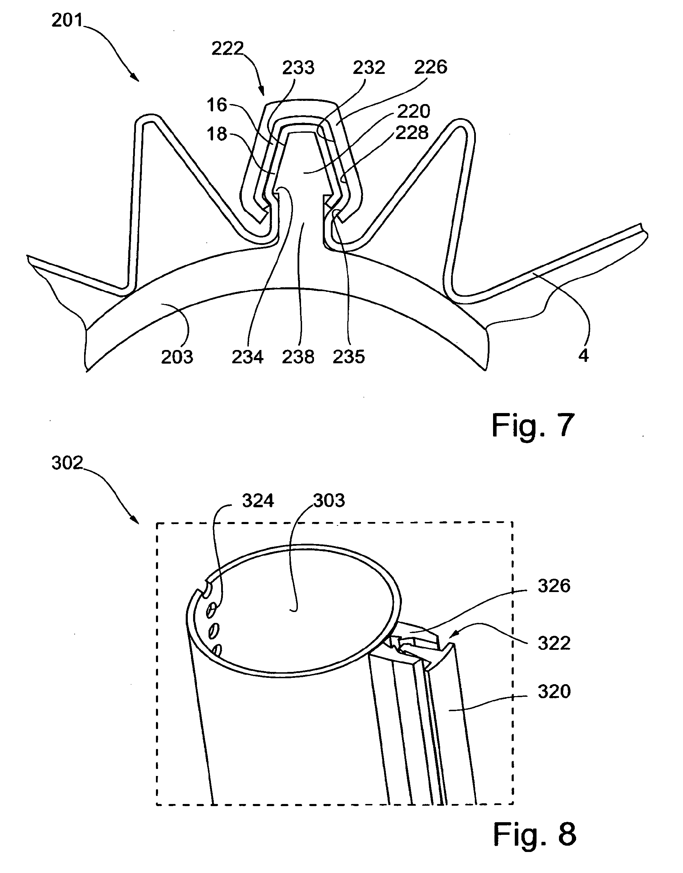

Im Folgenden werden Ausführungsbeispiele einer erfindungsgemäßen Filteranordnung zusammen mit den zugehörigen erfindungsgemäßen Stützvorrichtungen und Fügevorrichtungen anhand der Figuren 1 bis 7 näher erläutert. Anhand Figur 8 wird ein viertes Ausführungsbeispiel einer erfindungsgemäßen Stützvorrichtung erläutert. Es zeigen:
Figur 1 ein erstes Ausführungsbeispiel einer Filteranordnung in einer perspektivischen Ansicht;
Figur 2 eine Stützvorrichtung des ersten Ausführungsbeispiels gemäß Figur 1 ohne Befestigungselement in einer perspektivischen Ansicht;
Figur 3 eine Ausnehmung einer Fügevorrichtung des ersten Ausführungsbeispiels gemäß Figur 1 und 2 in einer perspektivischen Ansicht;
Figur 4 das erste Ausführungsbeispiel gemäß Figur 1 mit abgehobenem Deckel und eingesetztem Befestigungselement in einer perspektivischen Teilansicht;
Figur 5 ein Befestigungselement einer Fügevorrichtung eines zweiten Ausführungsbeispiels einer Filteranordnung in einer perspektivischen Ansicht;
Figur 6 das zweite Ausführungsbeispiel mit abgehobenem Deckel, eingesetztem Befestigungselement und einer Ultraschallschweißverbindung in einer schematischen Teilansicht von oben;
Figur 7 ein drittes, nicht von der Erfindung umfasstes Ausführungsbeispiel einer Filteranordnung mit einer alternativen Fügevorrichtung mit abgehobenem Deckel in einer schematischen Teilansicht von oben; und
Figur 8 ein viertes Ausführungsbeispiel einer Stützvorrichtung in einer perspektivischen Teilansicht.

Figur 1 zeigt ein erstes Ausführungsbeispiel einer Filteranordnung 1 in einer perspektivischen Ansicht. Eine derartige Filteranordnung 1 wird bevorzugt als Leitungsfilter verwendet, der beispielsweise unmittelbar stromabwärts einer Hydropumpe angeordnet ist. Über die Filteranordnung 1 werden dabei von einem Druckmittelvolumenstrom Partikel bzw. Verunreinigungen abgeschieden.

Die Filteranordnung 1 hat eine hohlkreiszylindrische Stützvorrichtung 2, um die herum ein Filterelement 4 angeordnet ist. An einer in Figur 1 unteren Seite der Filteranordnung 1 ist diese über einen Bodendeckel 6 verschlossen. Dem Bodendeckel 6 gegenüber, an einer in Figur 1 oberen Seite, ist die Filteranordnung 1 mit einem Ablaufdeckel 8 versehen. In dem Ablaufdeckel 8 ist eine Ablaufausnehmung 10 angeordnet, die eine Nut 11 aufweist, in die ein O-Ring 12 eingesetzt ist.

In einem bestimmungsgemäßen Betrieb der Filteranordnung 1 ist diese in einem Filtertopf (nicht dargestellt) eingesetzt, wobei zwischen einer Innenwandung des Filtertopfes und einer Außenwandung des Filterelementes 4 ein Ringraum ausgebildet ist. In diesen Ringraum mündet ein Zulaufkanal (ebenso nicht dargestellt), über den das zu filternde Druckmittel einströmen kann. In die Ablaufausnehmung 10 ist in dem bestimmungsgemäßen Zustand ein Aufnahmezapfen (nicht dargestellt) aufgenommen, über den das Druckmittel von der Filteranordnung 1 zu einem Ablaufkanal (nicht dargestellt) abführbar ist. Im Betrieb strömt somit das Druckmittel vom Zulaufkanal in den Ringraum zur radialen Außenseite des Filterelements 4, durch dieses hindurch in einen Ablaufraum 14 und von diesem durch die Ablaufausnehmung 10 hin zu einem niederdruckseitigen Ablauf der Filteranordnung 1.

Um bei dem Filterungsprozess eine Bypass-Strömung zu vermeiden, ist es notwendig, dass der Bodendeckel 6 und der Ablaufdeckel 8 druckmitteldicht mit dem Filterelement 4 verbunden sind. Weiterhin ist es wichtig, dass das Filterelement 4, das an der hohlkreiszylindrischen Stützvorrichtung 2 anliegt, mit seinen beiden Endabschnitten 16 und 18 druckmitteldicht verbunden ist. Diese druckmitteldichte Verbindung erfolgt über eine Fügevorrichtung, von der in Figur 1 lediglich ein Befestigungselement 20 zu sehen ist.

Eine eingehendere Erläuterung der Fügevorrichtung erfolgt anhand der folgenden Figuren.

Figur 2 zeigt hierzu die Stützvorrichtung 2 des ersten Ausführungsbeispiels gemäß Figur 1 in einer perspektivischen Ansicht. Die Stützvorrichtung 2 ist hohlkreiszylindrisch ausgebildet und ist mit Durchlässen 24 versehen, durch die das zu filternde Druckmittel in den Ablaufraum 14 einströmen kann. Entlang einer Längsachse der Stützvorrichtung 2 und radial außen an dieser ist eine Leiste 26 angeordnet, in der eine Ausnehmung 28 in Form einer Nut ausgebildet ist. Die Leiste 26 und die Ausnehmung 28 sind Teil der Fügevorrichtung 22.

Figur 3 zeigt in einer vergrößerten Darstellung die Ausnehmung 28 bzw. Nut der Fügevorrichtung 22 des ersten Ausführungsbeispiels gemäß den Figuren 1 und 2 in einer perspektivischen Ansicht. Die Ausnehmung 28 ist an einer dem Ablaufraum (vgl. Figur 1 und 2) der Stützvorrichtung 2 zugewandten Seite geschlossen. An einer radialen Außenseite der Ausnehmung 28 ist diese geöffnet. Ausgehend von der Öffnung der Ausnehmung 28 hat diese zwei, im Wesentlichen parallele, Flanken 30, die in einen Verjüngungsabschnitt 32 übergehen. An den Verjüngungsabschnitt 32 schließt eine laterale Erweiterung 34 der Ausnehmung 28 an. An die laterale Erweiterung 34 wiederum schließt sich ein sich verjüngender Verrastungsabschnitt 36 an.

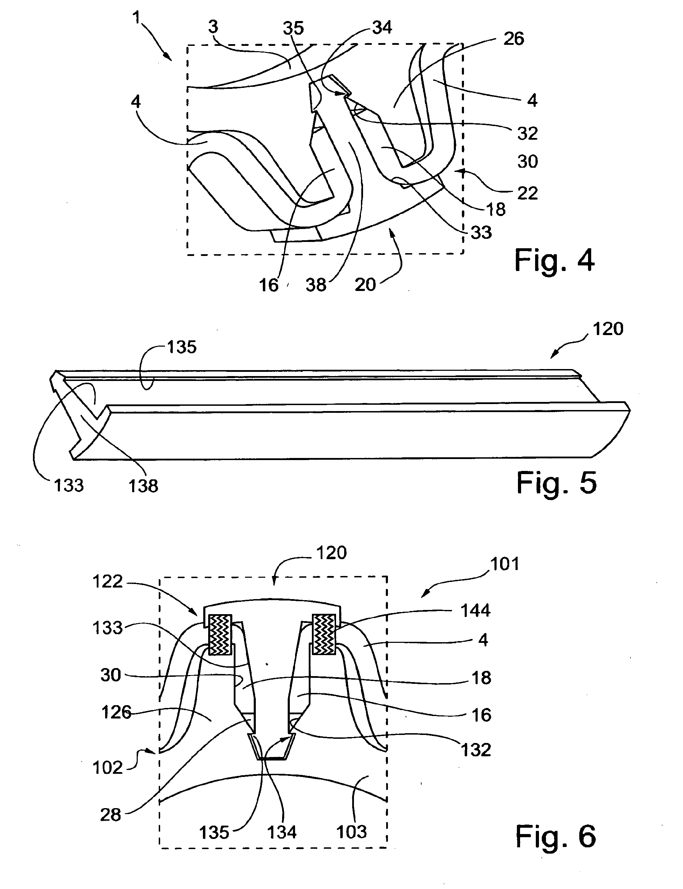

Figur 4 zeigt das erste Ausführungsbeispiel gemäß Figur 1 mit abgehobenem Ablaufdeckel, eingesetzten Endabschnitten 16 und 18 sowie dem eingesetzten Befestigungselement 20 in einer perspektivischen Teilansicht. Die Endabschnitte 16, 18 des plissierten Filterelementes 4 sind dabei derartig in die Ausnehmung 28 eingesetzt, dass sie gerade noch den Verjüngungsabschnitt 32 der Ausnehmung 28 berühren. Zwischen die beiden Endabschnitte 16, 18 ist das Befestigungselement 20 eingesetzt. Dabei sind zwei Umstände besonders förderlich für die zuverlässige und druckmitteldichte Verbindung der beiden Endabschnitte: Zum einen werden die beiden Endabschnitte 16, 18 über einen Verjüngungsabschnitt 33 einer Rippe 38 des Befestigungselementes 20 auf vergleichsweise scharfe Kanten 40 der Ausnehmung gedrückt, zum anderen werden sie zwischen dem Verjüngungsabschnitt und den Flanken 30 der Ausnehmung 28 eingeklemmt. Unter der Voraussetzung, dass sich das Befestigungselement 20 aus der in Figur 4 dargestellten Position nicht mehr löst, sind die Endabschnitte 16, 18 des Filterelementes 4 auf diese Weise sicher und nachhaltig befestigt. Damit das Befestigungselement 20 sich nicht in eine in Figur 4 nach unten gerichtete Richtung lösen kann, sind die lateralen Erweiterungen 34, 35 der Ausnehmung 28 und der Rippe 38 des Befestigungselementes 20 ineinander verrastet. Auf diese Weise ist das Befestigungselement 20 in der Ausnehmung 28 festgelegt.

Ein großer Vorteil der erfindungsgemäßen Fügevorrichtung 22 ist, dass nachdem die Endabschnitte 16, 18 in die Ausnehmung 28 eingelegt bzw. eingesetzt wurden, eine Einsetzrichtung des Befestigungselementes 20 die gleiche ist wie eine Einsetzrichtung der Endabschnitte 16, 18. Ein nachteiliges Verrutschen der Endabschnitte 16, 18 entgegen der Einsetzrichtung aufgrund eines Montage- oder Verbindungsvorganges ist somit ausgeschlossen, da das Verbindungselement 20 beim Einsetzen, insbesondere aufgrund des Verjüngungsabschnittes 33, die Endabschnitte 16, 18 immer in Richtung der Einsetzrichtung verschieben wird.

Figur 5 zeigt ein Befestigungselement 120 eines zweiten Ausführungsbeispiels einer Filteranordnung (101, vgl. Figur 6) in einer perspektivischen Ansicht. Das Befestigungselement 120 weist dabei in etwa eine Form eines T-Profils auf. Ein zentraler Schenkel des T-Profils ist dabei als Rippe 138 ausgebildet, die einen Verjüngungsabschnitt 133 aufweist. Die Rippe 138 hat eine laterale Erweiterung 135, die mit einer lateralen Erweiterung einer Ausnehmung verrastbar ist.

Figur 6 zeigt das zweite Ausführungsbeispiel einer Filteranordnung 101 mit abgehobenem Ablaufdeckel, eingesetzten Endabschnitten 16, 18, dem eingesetzten Befestigungselement 120 sowie einer Ultraschallschweißverbindung 144 in einer schematischen Teilansicht von oben. Vom ersten Ausführungsbeispiel gemäß Figur 4 unterscheidet es sich in zwei Punkten: durch die geometrische Ausgestaltung des Verjüngungsabschnittes 133 des Befestigungselementes 120 sowie durch die Ultraschallschweißverbindung 144. Verglichen mit dem Verjüngungsabschnitt 33 des Befestigungselementes 20 des ersten Ausführungsbeispiels der Figur 4, weist das Befestigungselement 120 einen sich schwächer verjüngenden Verjüngungsabschnitt 133 auf, der dafür jedoch, verglichen mit dem Verjüngungsabschnitt 33, länger ist bzw. tiefer in die Ausnehmung 28 eintaucht. Zudem ist der Verjüngungsabschnitt 133 über im Wesentlichen planare Flanken ausgebildet, wohingegen der Verjüngungsabschnitt 33 gemäß Figur 5 konkave Flanken aufweist. Über den längeren und sich vergleichsweise schwächer verjüngenden Verjüngungsabschnitt 133 sind die Endabschnitte 16, 18 nicht nur über die Kante 40 und den Verjüngungsabschnitt 133 eingeklemmt, sondern zusätzlich zwischen dem vergleichsweise langen Verjüngungsabschnitt 133 und den Flanken 30 der Ausnehmung 28 eingeklemmt. Obwohl das Befestigungselement 120 analog zum Befestigungselement 20 gemäß Figur 4 über seine lateralen Erweiterungen 135 mit den lateralen Erweiterungen 134 der Ausnehmung 28 verrastet ist, ist es zusätzlich über die Ultraschallschweißverbindung 144 stoffschlüssig mit einer die Ausnehmung 28 tragenden Leiste 126 verbunden. Somit ist eine Verschiebung, eine Verstellung oder eine Entrastung des Befestigungselementes 120 unmöglich.

Figur 7 zeigt ein drittes, nicht von der Erfindung umfasstes Ausführungsbeispiel einer Filteranordnung 201 mit einer alternativen Fügevorrichtung 222 mit abgehobenem Ablaufdeckel in einer schematischen Teilansicht von oben. Anders als bei allen vorher gezeigten Ausführungsbeispielen ist bei diesem Ausführungsbeispiel ein Befestigungselement 220 einstückig mit einer Stützvorrichtung 202 verbunden. Das Befestigungselement 220 weist dabei von der hohlzylindrischen bzw. kreiszylindrischen Stützvorrichtung 202 radial nach außen. Die Endabschnitte 16, 18 des Filterelementes 4 sind dabei derartig um das Befestigungselement 220 gelegt, dass sie dieses zumindest soweit überdecken, dass laterale Erweiterungen 234 des Befestigungselementes 220 von ihnen überdeckt sind. Um die Endabschnitte 16, 18 nun am Befestigungselement 220 festzulegen, ist eine Leiste 226, in der eine Ausnehmung 228 ausgebildet ist, clipartig über das Befestigungselement 220 bzw. die Endabschnitte 16, 18 montiert. Dabei weist auch die Ausnehmung 228 laterale Erweiterungen 235 auf, die die lateralen Erweiterungen 234 des Befestigungselementes 220 hintergreifen. Auf diese Weise ist die Leiste 226 fest über das Befestigungselement 220 gestülpt, und die Endabschnitte 16, 18 sind über die Fügevorrichtung 222 festgelegt.

Figur 8 zeigt ein viertes Ausführungsbeispiel einer Stützvorrichtung 302 in einer perspektivischen Teilansicht. Im Unterschied zu den Stützvorrichtungen der bisherigen Ausführungsbeispiele ist die Stützvorrichtung 302 derart mehrteilig ausgeführt, dass ein Stützkorb 303 nicht einstückig mit einem Teil der Fügevorrichtung 322 ausgebildet ist. Neben der Tatsache, dass die Fügevorrichtung 322 aus einer Leiste 326 und einem Befestigungselement 320 besteht, hat die Stützvorrichtung 302 den Stützkorb 303, der aus Metall gefertigt ist. Zur Vereinfachung der Darstellung weist der Stützkorb 303 lediglich eine Reihe von Durchlässen 324 auf. Auf eine Darstellung weiterer Durchlässe 324 wurde verzichtet. Die Leiste 326 der Fügevorrichtung 322 ist dabei in geeigneter Weise über einstückig mit der Leiste 326 ausgebildete Verbindungsvorsprünge in die Durchlässe 324 form- und kraftschlüssig eingerastet (nicht dargestellt). Der metallische Stützkorb 303 ist korrosionsgeschützt ausgeführt. Zu dessen Herstellung sind mehrere Arbeitsschritte erforderlich, wie beispielsweise Zuschneiden, Perforieren, Umformen zu einem hohlzylindrischen Stützkorb und Fügen der Zylinderenden. Gegebenenfalls sind während dieser Prozessschritte ein Entschichten und Wiederbeschichten mit Korrosionsschutz notwendig. Als Korrosionsschutz kommt hier meist Zinn zum Einsatz. Gegenüber dem vierten Ausführungsbeispiel gemäß Figur 8 weisen die aus Kunststoff gefertigten Stützkörbe der drei vorhergehenden Ausführungsbeispiele einen entscheidenden Vorteil auf. Sie sind leichter und zudem einfacher über ein Spritzgussverfahren zu fertigen. Hinzu kommt, dass bei Verwendung eines Kunststoffes für den Stützkorb die ebenso bevorzugt aus Kunststoff gefertigte Fügevorrichtung 22, 122 und 222 auf vorteilhafte Weise zumindest teilweise einstückig mit den entsprechenden Stützkörben fertigbar ist.

Die Stützkörbe 3; 103 und 203 der Ausführungsbeispiele gemäß den Figuren 1 bis 7 sind aus einem leitfähigen Kunststoff gefertigt und stellen somit eine Ausführung als Antistatikelement dar.

Die Ausführungsbeispiele gemäß den Figuren 1 bis 8 sind sowohl für Differenzdrücke eines Niederdruckbereiches als auch Hochdruckbereiches einsetzbar.

Durch die Verwendung der erfindungsgemäßen Fügevorrichtungen 22; 122; 222 und 322 kann beim Fügen der Endabschnitte auf herkömmliche Klebstoffe verzichtet werden, was einen erheblichen vorrichtungstechnischen und verfahrenstechnischen Vorteil bedeutet.

Aufgrund der geometrischen Ausgestaltung der Fügevorrichtungen 22; 122; 222 und 322 ist einem inkorrekten Fügen der Endabschnitte 16, 18 vorgebeugt, da diese mit einer Einsetzung der Befestigungselemente 20; 120; 220 und 320 zunehmend in die entsprechende Ausnehmung gedrückt werden.

Abweichend von den gezeigten Ausführungsbeispielen ist es möglich, dass eine Filteranordnung anstatt dem geschlossenen Bodendeckel einen weiteren Ablaufdeckel aufweist, so dass das gefilterte Fluid aus der Filteranordnung beidseitig abströmen kann. In diesem Fall ist der Ablaufraum einer Stützvorrichtung der Filteranordnung zu beiden Ablaufausnehmungen der Bodendeckel hin geöffnet.

Der Druckbereich, in dem die erfindungsgemäße Filteranordnung, Stützvorrichtung oder Fügevorrichtung vorteilhaft einsetzbar ist, erstreckt sich vom Niederdruckbereich bis in den Hochdruckbereich mit Drücken von zumindest 160 bis 200 bar.

Beim Einsatz der erfindungsgemäßen Filteranordnung zum Filtern von Gasen oder Dämpfen ist die Verbindung der Endabschnitte gasdicht gestaltet.

### Bezugszeichenliste

- 1;101; 201: Filteranordnung
- 2; 102; 202; 302: Stützvorrichtung
- 3; 103; 203; 303: Stützkorb
- 4: Filterelement
- 6: Bodendeckel
- 8: Ablaufdeckel
- 10: Ablaufausnehmung
- 11: Nut
- 12: O-Ring
- 14: Ablaufraum
- 16, 18: Endabschnitt
- 20; 120; 220; 320: Befestigungselement
- 22; 122; 222; 322: Fügevorrichtung
- 24; 324: Durchlass
- 26; 126; 226; 326: Leiste
- 28; 228: Ausnehmung
- 30: Flanke
- 32; 132; 232: Verjüngungsabschnitt
- 33; 133; 233: Verjüngungsabschnitt
- 34; 134; 234: laterale Erweiterung
- 35; 135; 235: laterale Erweiterung
- 36: Verrastungsabschnitt
- 38; 138 ; 238: Rippe
- 40: Kante
- 144: Ultraschallschweißverbindung

## Patentansprüche

1. Stützvorrichtung für ein Filterelement (4) der Fluidtechnik, mit einer hohlzylindrischen fluiddurchlässigen Wandung, an der das Filterelement (4) abstützbar ist, und mit einer Fügevorrichtung (22; 122; 222; 322) zur Verbindung von Endabschnitten (16, 18) des Filterelements (4), , mit einer Ausnehmung (28; 228) zur Aufnahme der Endabschnitte (16, 18), , wobei die Ausnehmung (28; 228) als Nut an der Stützvorrichtung ausgebildet ist, wobei die Fügevorrichtung (22; 122; 222; 322) ein Befestigungselement (20; 120; 220; 320) hat, das zur Festlegung der Endabschnitte (16, 18) zumindest abschnittsweise in die Ausnehmung (28; 228) und zwischen die Endabschnitte (16, 18) einsetzbar ist, und wobei das Befestigungselement (20; 120; 220) eine in die Nut einsetzbare Rippe (38; 138; 238) hat oder ist, **dadurch gekennzeichnet, dass**
die Nut und die Rippe (38; 138; 238) jeweils eine laterale Erweiterung (34, 35; 134, 135; 234, 235) aufweisen, und wobei die lateralen Erweiterungen (34, 35; 134, 135; 234, 235) miteinander verrastbar sind, dass
die Nut einen Verjüngungsbereich (32, 132) besitzt, und dass die laterale Erweiterung (34, 134) der Nut tiefer in der Nut angeordnet ist, als der Verjüngungsbereich (32, 132) der Nut, und dass
die Endabschnitte (16, 18) gerade bis zum Verjüngungsbereich (32, 132) der Nut in die Nut eingesetzt sind.

2. Stützvorrichtung nach Patentanspruch 1, wobei die Endabschnitte (16, 18) kraftschlüssig oder formschlüssig festlegbar sind.

3. Stützvorrichtung nach Patentanspruch 1 oder 2, wobei das Befestigungselement (20; 120; 220) in einer Einsetzrichtung einen Verjüngungsabschnitt (33, 133, ) aufweist.

4. Stützvorrichtung nach Patentanspruch 3, wobei die Nut an einer Leiste (26; 326) angeordnet ist.

5. Stützvorrichtung nach einem der vorhergehenden Patentansprüche, wobei die Wandung perforiert ist, oder wobei die Wandung gitter-, sieb- oder korbartig ausgestaltet ist.

6. Stützvorrichtung nach einem der vorhergehenden Patentansprüche, die überwiegend aus Kunststoff oder überwiegend aus Metall besteht.

7. Filteranordnung mit einem Filterelement (4) oder mehreren Filterelementen der Fluidtechnik, und mit einer Stützvorrichtung (2; 102; 202) nach einem der vorhergehenden Patentansprüche, an der das Filterelement (4) oder die Filterelemente abgestützt ist oder sind, wobei Endabschnitte (16, 18) des Filterelements (4) oder der Filterelemente in die Ausnehmung (28; 228) der Fügevorrichtung (22; 122; 222) der Stützvorrichtung (2; 102; 202) eingesetzt sind, und wobei das Befestigungselement (20; 120; 220) der Fügevorrichtung (22; 122; 222) zumindest abschnittsweise in die Ausnehmung (28; 228) eingesetzt ist, sodass die Endabschnitte (16, 18) über das Befestigungselement (20; 120; 220) in der Ausnehmung (28; 228) festgelegt sind.

8. Filteranordnung nach Patentanspruch 7, wobei ein Rand der Ausnehmung (28) zumindest abschnittsweise stoffschlüssig mit den Endabschnitten (16, 18) und dem Befestigungselement (120) verbunden ist.

## Claims

1. Support device for a filter element (4) in fluid technology, with a hollow-cylindrical fluid-permeable wall on which the filter element (4) can be supported, and with a joining device (22; 122; 222; 322) for the connection of end portions (16, 18) of the filter element (4), and with a recess (28; 228) for receiving the end portions (16, 18), the recess (28; 228) being formed as a groove on the support device, the joining device (22; 122; 222; 322) having a fastening element (20; 120; 220; 320) which, to secure the end portions (16, 18), can be inserted at least partially into the recess (28; 228) and between the end portions (16, 18), and the fastening element (20; 120; 220) having or being a rib (38; 138; 238) which is insertable into the groove, **characterized in that** the groove and the rib (38; 138; 238) have in each case a lateral widening (34, 35; 134, 135; 234, 235), and the lateral widenings (34, 35; 134, 135; 234, 235) being latchable with one another, **in that** the groove possesses a taper region (32, 132), **in that** the lateral widening (34, 134) of the groove is arranged more deeply in the groove than the taper region (32, 132) of the groove, and **in that** the end portions (16, 18) are inserted into the groove just as far as the taper region (32, 132) of the groove.

2. Support device according to Patent Claim 1, the end portions (16, 18) being securable non-positively or positively.

3. Support device according to Patent Claim 1 or 2, the fastening element (20; 120; 220) having a taper portion (33, 133) in an insertion direction.

4. Support device according to Patent Claim 3, the groove being arranged on a ridge (26; 326).

5. Support device according to one of the preceeding patent claims, the wall being perforated or the wall having a lattice-like, sieve-like or basket-like configuration.

6. Support device according to one of the preceding patent claims, which consist predominantly of plastic or predominantly of metal.

7. Filter arrangement with a filter element (4) or a plurality of filter elements in fluid technology, and with a support device (2; 102; 202) according to one of the preceding patent claims, on which the filter element (4) or the filter elements is or are supported, end portions (16, 18) of the filter element (4) or of the filter elements being inserted into the recess (28; 228) of the joining device (22; 122; 222) of the support device (2; 102; 202), and the fastening element (20; 120; 220) of the joining device (22; 122; 222) being inserted at least partially into the recess (28; 228), so that the end portions (16, 18) are secured in the recess (28; 228) via the fastening element (20; 120; 220).

8. Filter arrangement according to Patent Claim 7, a margin of the recess (28) being connected at least partially in a materially integral manner to the end portions (16, 18) and to the fastening element (120).

## Revendications

1. Dispositif de support pour un élément de filtre (4) de la technique des fluides, comprenant une paroi cylindrique creuse perméable aux fluides, sur laquelle l'élément de filtre (4) peut être supporté, et comprenant un dispositif d'assemblage (22 ; 122 ; 222 ; 322) pour la liaison de portions d'extrémité (16, 18) de l'élément de filtre (4), comportant un évidement (28 ; 228) pour la réception des portions d'extrémité (16, 18), l'évidement (28 ; 228) étant réalisé sous la forme d'une rainure sur le dispositif de support, le dispositif d'assemblage (22 ; 122 ; 222 ; 322) présentant un élément de fixation (20 ; 120 ; 220 ; 320) qui peut être inséré au moins en partie dans l'évidement (28 ; 228) et entre les portions d'extrémité (16, 18) en vue de la fixation des portions d'extrémité (16, 18), et l'élément de fixation (20 ; 120 ; 220) présentant ou étant une ailette (38 ; 138 ; 238) pouvant être insérée dans la rainure,
**caractérisé en ce que**
la rainure et l'ailette (38 ; 138 ; 238) présentent respectivement un élargissement latéral (34, 35 ; 134, 135 ; 234, 235), et les élargissements latéraux (34, 35 ; 134, 135 ; 234, 235) pouvant être encliquetés les uns avec les autres, **en ce que**
la rainure possède une région de rétrécissement (32, 132), et **en ce que** l'élargissement latéral (34, 134) de la rainure est disposé plus profondément dans la rainure que la région de rétrécissement (32, 132) de la rainure, et **en ce que**
les portions d'extrémité (16, 18) sont insérées dans la rainure précisément jusqu'à la région de rétrécissement (32, 132) de la rainure.

2. Dispositif de support selon la revendication 1, dans lequel les portions d'extrémité (16, 18) peuvent être fixées par engagement par force ou par coopération de formes.

3. Dispositif de support selon la revendication 1 ou 2, dans lequel l'élément de fixation (20 ; 120 ; 220) présente une portion de rétrécissement (33, 133) dans une direction d'insertion.

4. Dispositif de support selon la revendication 3, dans lequel la rainure est disposée sur une barrette (26 ; 326).

5. Dispositif de support selon l'une quelconque des revendications précédentes, dans lequel la paroi est perforée, ou dans lequel la paroi est configurée en forme de grille, de tamis ou de panier.

6. Dispositif de support selon l'une quelconque des revendications précédentes, lequel est constitué essentiellement de plastique ou essentiellement de métal.

7. Agencement de filtre comprenant un élément de filtre (4) ou plusieurs éléments de filtre de la technique des fluides, et comprenant un dispositif de support (2 ; 102 ; 202) selon l'une quelconque des revendications précédentes, sur lequel l'élément de filtre (4) ou les éléments de filtre est ou sont supporté(s), dans lequel des portions d'extrémité (16, 18) de l'élément de filtre (4) ou des éléments de filtre sont insérées dans l'évidement (28 ; 228) du dispositif d'assemblage (22 ; 122 ; 222) du dispositif de support (2 ; 102 ; 202), et dans lequel l'élément de fixation (20 ; 120 ; 220) du dispositif d'assemblage (22 ; 122 ; 222) est inséré au moins en partie dans l'évidement (28 ; 228), de telle sorte que les portions d'extrémité (16, 18) soient fixées dans l'évidement (28 ; 228) par le biais de l'élément de fixation (20 ; 120 ; 220).

8. Agencement de filtre selon la revendication 7, dans lequel un bord de l'évidement (28) est relié au moins en partie par liaison de matière aux portions d'extrémité (16, 18) et à l'élément de fixation (120).
